# EUROPÄISCHE PATENTSCHRIFT

(11) **EP 0 920 780 B1**
(45) Veröffentlichungstag und Bekanntmachung des Hinweises auf die Patenterteilung: **09.03.2005**
(21) Anmeldenummer: 97938912.9
(22) Anmeldetag: 16.08.1997
(51) Int. Cl.: H04N 7/18

(54) **BILDÜBERTRAGENDE OBJEKTFERNUNTERSUCHUNGSEINRICHTUNG**
PICTURE-TRANSMITTING REMOTE OBJECT INSPECTION SYSTEM
SYSTEME DE TELEANALYSE D'OBJETS TRANSMETTANT DES IMAGES

(30) Priorität: 23.08.1996 DE 19633997
(43) Veröffentlichungstag der Anmeldung: 09.06.1999
(73) Patentinhaber: Deutsche Telekom AG, 53113 Bonn (DE)
(72) Erfinder: SCHWARZMANN, Peter, D-72555 Metzingen (DE); SCHMID, Joachim, D-73431 Aalen (DE); BINDER, Bernd, D-72138 Kirchentellinsfurt (DE)
(74) Vertreter: Patentanwälte Ruff, Wilhelm, Beier, Dauster & Partner
(86) Internationale Anmeldenummer: PCT/EP1997/004473
(87) Internationale Veröffentlichungsnummer: WO 1998/008342

(56) Entgegenhaltungen:
- EP-A- 0 293 083
- GB-A- 2 288 511
- US-A- 5 216 596
- US-A- 5 331 551

## Beschreibung

Die Erfindung bezieht sich auf eine Objektfernuntersuchungseinrichtung mit einem am Ort des zu untersuchenden Objektes angeordneten Bildaufnahmesystem, einer davon räumlich entfernt angeordneten Beobachtungsstation zur Bildauswertung und zur Fernsteuerung des Bildaufnahmesystems sowie mit einer zwischenliegenden schmalbandigen Telekommunikations-Übertragungsstrecke, über welche die vom Bildaufnahmesystem erzeugten Bilddaten unter Verwendung von Bilddatenkompression und/oder -reduktion zur Beobachtungsstation sowie von der Beobachtungsstation erzeugte Steuerbefehlsignale zur Fernsteuerung des Bildaufnahmesystems übertragen werden.

Derartige Objektfernuntersuchungseinrichtungen sind beispielsweise in Form von Telemikroskopiesystemen bekannt, wie sie insbesondere zur Telepathologie eingesetzt werden. Das zu untersuchende Objekt ist in diesem Fall ein Gewebeschnitt, der z.B. während einer Operation angefertigt wird. Das Bildaufnahmesystem beinhaltet ein in allen Funktionen fernsteuerbares Mikroskop, eine Bildaufnahmeeinrichtung für das Mikroskopgesichtsfeld, einen Sender für das Bildsignal und einen Empfänger für die Steuerbefehle an das Mikroskop. Sender und Empfänger sowie ein zusätzlicher Sprachkanal sind über eine Schnittstelle mit einer Telekommunikations-Übertragungsstrecke verbunden. Die Beobachtungsstation beinhaltet einen Empfänger, einen Monitor für die wiederzugebenden Bilder, eine Vorrichtung zur Erzeugung der Steuerbefehle für das Mikroskop und einen Sender für diese Steuerbefehle. Der Beobachter bzw. Experte, z.B. ein entsprechender Rechner oder ein Pathologe, kann dann das übertragene Mikroskopbild auswerten. Sender und Empfänger sowie ein Sprachkanal sind wiederum über eine geeignete Schnittstelle mit derselben Telekommunikations-Übertragungsstrecke wie das Bildaufnahmesystem verbunden.

Wenn die Telekommunikations-Übertragungsstecke eine für die Übertragung eines Fernsehsignals ausreichende Bandbreite besitzt, kann der Beobachter an der Beobachtungsstation alle Funktionen des räumlich entfernt angeordneten Mikroskopes so nutzen, als ob dieses sich an seinem Arbeitsplatz befinden würde. Ein solches Telepathologiesystem mit Breitband-Datenübertragung ist in der Patentschrift US 5.216.596 beschrieben. Allerdings sind Breitbandtelekommunikationskanäle für Fernsehsignale vergleichsweise kostspielig und nur beschränkt verfügbar. Es wurde deshalb bereits vorgeschlagen, Telemikroskopie über die weltweit und preiswert verfügbaren Schmalbandkanäle der Fernsprechnetze zu betreiben. Eine Anlage mit derartiger Schmalband-Technologie unter Verwendung des ISDN-Netzes wird in dem Aufsatz M. Oberholzer et al, Telepathologie: frozen section diagnosis at a distance (1995), 426, Seite 3 beschrieben. Die beschränkte Kanalkapazität bildet jedoch einen Engpaß für die Übertragung der Bildinformation, so daß der Online-Eindruck für den Benutzer verloren gehen kann und er statt einer bewegten Bildszene lediglich eine langsam aufeinanderfolgende Reihe von Einzelbildern erhält. Dadurch geht dem Benutzer auch der unmittelbare Eindruck der Wirkung seiner Mikroskopsteuerbefehle verloren, da deren Auswirkung für ihn erst mit größerer Verzögerung und im Zusammenhang verändert sichtbar wird. Die Verwendung der Techniken der Videotelefonie erlaubt lediglich die Übertragung von in der Bildqualität für die meisten der hier betrachteten Anwendungen, wie Telemikroskopie, Teleendoskopie und Telesonografie, ungenügenden Bildszenen.

Es wurden auch bereits einige Maßnahmen zur ökonomischen Verwendung von ISDN-Kanälen für Schmalband-Telemikroskopiesysteme vorgeschlagen, wie z.B. den Einsatz eines speziellen Autofokussystems und die Verwendung einer für das jeweilige System fest vorgegebenen, angepaßten Art der Komprimierung und Reduktion der zu übertragenden Bilddaten während deren Codierung, siehe die Aufsätze P. Schwarzmann, Telemikroscopy, Zentralbl. Pathol. 138, (1992) 6, Seite 383 und P. Schwarzmann et al., Telemikroscopy Stations for Telepathology Based on Broadband and ISDN Connections, 1995, 43, Nr. 4, Seite 209.

In einem vom Institut für physikalische Elektronik der Universität Stuttgart und der Deutschen Telekom AG gemeinsam 1995 herausgegebenen Informationsblatt über das Szenario für die Anwendung der Telepathologie in der Schnellschnittdiagnose wird vorgeschlagen, die beschränkte Kapazität bei der Schmalband-Telemikroskopie über das bestehende ISDN-Netz dadurch in einer optimierten Form zu nutzen, daß das System abhängig vom Verhalten des Benutzers, d.h. des Beobachters an der Beobachtungsstation, unterschiedliche Strategien zur Bilddatenkompression und -reduktion einschlägt, z.B. Auswahl einer stärkeren Datenreduktion hinsichtlich Farbe, Ortsauflösung und Quantisierung der Bilddaten bei Anforderung einer erhöhten Anzahl von Bildübertragungen pro Zeiteinheit aufgrund rascherer Verschiebung des Objektes unter dem Mikroskop.

Der Erfindung liegt als technisches Problem die Bereitstellung einer bildübertragenden Objektfernuntersuchungseinrichtung der eingangs genannten Art zugrunde, die sich in ihrem Übertragungsverhalten sehr flexibel und variabel selbsttätig an die jeweilige Situation so anzupassen vermag, daß von den vorhandenen Schmalband-Datenübertragungskapazitäten stets optimaler Gebrauch gemacht wird.

Die Erfindung löst dieses Problem durch die Bereitstellung einer bildübertragenden Objektfernuntersuchungseinrichtung mit den Merkmalen des Anspruchs 1. Diese Einrichtung beinhaltet eine Systemzustandsbestimmungseinheit, die laufend den gesamten bildübertragungsrelevanten Systemzustand einschließlich der jeweils verfügbaren Systemressourcen erfaßt und abhängig davon den Vorgang der Bilddatenkompression und/oder Bilddatenreduktion und/oder die Anzahl von in einem Übertragungsbündel verwendeten Kanälen der Übertragungsstrecke selbsttätig so steuert, daß sowohl die für eine jeweilige Situation wünschenswerte Bildqualität erhalten als auch ein jeweils noch für die betreffende Situation bestmöglicher Online-Bildeindruck erzielt werden. Damit vermag sich die Einrichtung flexibel und variabel hinsichtlich der Bildübertragung an den jeweils vorhandenen Systemzustand anzupassen. Zu diesem bildübertragungsrelevanten, von der Systemzustandsbestimmungseinheit überwachten Systemzustand gehören je nach Systemauslegung neben dem Benutzerverhalten, d.h. den vom Beobachter eingegebenen Steuerbefehlen für das Bildaufnahmesystem, insbesondere der Istzustand hinsichtlich der Anzahl aufgeschalteter Einzelkanäle des Telekommunikationskanalbündels, die Art des verwendeten Telekommunikationsnetzes, der Zustand der die Bilddatenkompression und/oder -reduktion vornehmenden Codiereinheit, der Typ der verwendeten Bildaufnahmeeinrichtung und der jeweilige Bildinhalt.

Trotz Schmalband-Telekommunikationsverbindung zwischen Bildaufnahmesystem und Beobachtungsstation vermag damit die erfindungsgemäße Einrichtung für den Benutzer den Eindruck eines Online- bzw. Echtzeit-Betriebes bei hoher Bildqualität aufrechtzuerhalten. Sie eignet sich für verschiedene Arten von Objektfernuntersuchungen, z.B. Werkstoffprüfungen aus der Ferne, Telemikroskopie, Telendoskopie und Telesonografie, je nach untersuchtem Objekt und verwendetem Bildaufnahmesystem.

Bei Verwendung der Einrichtung als Telemikroskopiesystem in der Telepathologie wird dem Pathologen ein Werkzeug an die Hand gegeben, mit dem er Telepathologie mit einem hohen Grad von Telepräsenz betreiben kann.

Bei einer nach Anspruch 2 weitergebildeten Einrichtung werden die Parameter zur Bilddatenkompression und/oder -reduktion unter anderem in Abhängigkeit vom Bildinhalt und der gewählten Bildvergrößerung eingestellt. So können z.B. wenig strukturierte, hochvergrößerte Bilder gegebenenfalls mit höherer Bildübertragungsrate und geringerer Bildauflösung übertragen werden als stark strukturierte Bilder geringerer Vergrößerung.

Eine nach Anspruch 3 weitergebildete Einrichtung verwendet als Übertragungsstrecke ein Telekommunikationskanalbündel, bei dem die Anzahl jeweils verwendeter Kanäle abhängig vom erfaßten Systemzustand eingestellt wird und wobei die Kanallaufzeiten automatisch kompensiert werden. Letzteres ist deshalb von Bedeutung, weil der Benutzer selbst im allgemeinen keine Kontrolle darüber hat, auf welchen Wegen die einzelnen Kommunikationskanäle, z.B. Fernsprechkanäle, durchgeschaltet werden. Die ISDN-Netztechnologie hat sich für eine derartige Bündellösung als besonders geeignet erwiesen.

Bei einer nach Anspruch 4 weitergebildeten Einrichtung verfügt das Bildaufnahmesystem über eine Autofokuseinrichtung, deren Funktion über eine Mehrzahl von Steuerparametern systemzustandsabhängig gesteuert wird. Dadurch läßt sich die Übertragung von nur für die Bildfokusierung notwendigen, meist erheblichen Bilddatenmengen vermeiden. Die Steuerung der Autofokuseinrichtung kann wahlweise interaktiv oder selbsttätig vom System erfolgen.

Eine nach Anspruch 5 weitergebildete Einrichtung beinhaltet eine selbsttätige Helligkeitssteuerung auf Seiten des Bildaufnahmesystems, die wahlweise automatisch oder interaktiv aktivierbar ist. Auch durch eine derartige Helligkeitskontrolle kann die Übertragung von für die Bildauswertung redundanter Bildinformation vermieden werden, so daß sich der Online-Eindruck der übertragenen Bilder erhöhen läßt.

Eine nach Anspruch 6 weitergebildete Einrichtung ermöglicht einen Bewegungseindruck von übertragenen, bewegten Bildszenen dadurch, daß in groben Schritten Einzelbilder übertragen werden, die sich noch teilweise überlappen, und in der Beobachtungsstation anschließend interpolierende Zwischenbilder generiert und nacheinander zur Anzeige gebracht werden.

Bei einer nach Anspruch 7 weitergebildeten Einrichtung wird ein Bewegungeindruck von übertragenen, bewegten Bildszenen dadurch vermittelt, daß während einer solchen Bildbewegung in aufeinanderfolgenden Schritten nicht jeweils das gesamte Einzelbild, sondern nur dienjenigen Bildbereiche übertragen werden, die gegenüber dem vorangegangenen Einzelbild neu hinzugekommen sind. Diese Bildbereiche werden dann in der Beobachtungsstation an das vorige Einzelbild zur Erzeugung des neuen Einzelbildes angefügt.

Bei einer nach Anspruch 8 weitergebildeten Einrichtung wird der Beschäftigungszustand desselben, d.h. dessen Übertragungsstreckenauslastung und Systemaktivität, optisch, akustisch und/oder mechanisch mittels Kraftrückwirkung auf ein zugehöriges Bedienelement angezeigt.

Eine nach Anspruch 9 weitergebildete Einrichtung enthält als Bedieneinheit für den Beobachter an der Beobachtungsstation ein Phantom, d.h. eine Nachbildung, der im Bildaufnahmesystem verwendeten Bildaufnahmeeinrichtung derart, daß Betätigungen des Beobachters an dem Phantom erfaßt und in Steuerbefehle zur entsprechenden Einstellung der realen Bildaufnahmeeinrichtung umgesetzt werden.

Bei einer nach Anspruch 10 weitergebildeten Einrichtung besteht die Möglichkeit der prophylaktischen Übertragung von Bildszenen, die nach Vorausschätzung durch das System zu einem späteren Zeitpunkt benötigt werden, in Zeitpunkten mit ungenutzter Übertragungskanalkapazität. Dazu enthält die Einrichtung einen Prädiktor für die wahrscheinliche Fortsetzung der Objektfernuntersuchtung, der z.B. aus den Orten bislang übertragener Objektgebiete auf die Orte der nächsten Bildübertragungen schließt, beispielsweise durch entsprechende Verlängerung der Spur der zuletzt übertragenen Gebiete.

Bei einer nach Anspruch 11 weitergebildeten Einrichtung ist für die Bildwiedergabe an der Beobachtungsstation ein Darstellungswerkzeug vorgesehen, mit dem ein Gesamtbild auf einem separaten Bildschirm oder in Form eines eingeblendeten Fensters auf dem für die Detailbilder verwendeten Bildschirm dargestellt werden kann, wobei eine Markierungsfläche variabler Größe die Position des aktuellen Gesichtsfeldes der Bildaufnahmeeinrichtung angibt. Gegebenenfalls können bereits verwendete Positionen der Markierungsfläche im Gesamtbild markiert bleiben, um Doppeluntersuchungen zu vermeiden.

Eine nach Anspruch 12 weitergebildete Einrichtung bietet die Möglichkeit der Archivierung von ausgewählten Bildszenen.

Eine nach Anspruch 13 weitergebildete Einrichtung besitzt die Fähigkeit, daß anhand der zuvor abgespeicherten Archivierungsdaten eine bestimmte, gewünschte Bildszene durch entsprechende Ansteuerung des Bildaufnahmesystems rasch wieder aufgesucht und dargestellt werden kann. Dies ist z.B. nützlich, wenn zunächst eine Voruntersuchung stattfindet und erst anschließend eine endgültige Auswertung anhand ausgewählter Bildszenen vorgenommen wird. Dabei kann vorgesehen sein, daß der Beobachter mit der Markierungsfläche einen bestimmten Bereich im Übersichtsbild anfährt, der dann in vergrößertem Maßstab dargestellt wird, wodurch die Einrichtung eine für den Benutzer bequeme Lupenfunktion erfüllt.

Bei einer nach Anspruch 14 weitergebildeten Einrichtung besteht die Möglichkeit, kleine, auswählbare Bildbereiche eines Gesamtbildes in Echtzeit mit höchster Bildqualität zu übertragen, wofür die Kapazität der Schmalband-Übertragungsstrecke im allgemeinen ausreicht.

Eine bevorzugte Ausführungsform der Erfindung ist in den Zeichnungen dargestellt und wird nachfolgend beschrieben. Hierbei zeigen:
- Fig. 1: ein Blockdiagramm einer Telemikroskopieanlage mit schmalbandiger Telekommunikationskanal-Übertragungsstrecke,
- Fig. 2: eine Bildfolge zur Veranschaulichung eines ersten Verfahrens zur Vermittlung eines Bewegungseindrucks bei der Telemikroskopieanlage von Fig. 1,
- Fig. 3: eine Bildfolge zur Veranschaulichung eines zweiten Verfahrens zur Vermittlung eines Bewegungseindrucks bei der Telemikroskopieanlage von Fig. 1,
- Fig. 4: eine schematische Darstellung einer mechanischen Bedienelement-Kraftrückführung für die Telemikroskopieanlage von Fig. 1,
- Fig. 5: ein Flußdiagramm eines Hintergrund-Bildübertragungsverfahrens der Telemikroskopieanlage von Fig. 1 und
- Fig. 6: eine schematische Bildschirmdarstellung zur Veranschaulichung eines Verfahrens für die Untersuchungsbereichsmarkierung bei der Telemikroskopieanlage von Fig. 1.

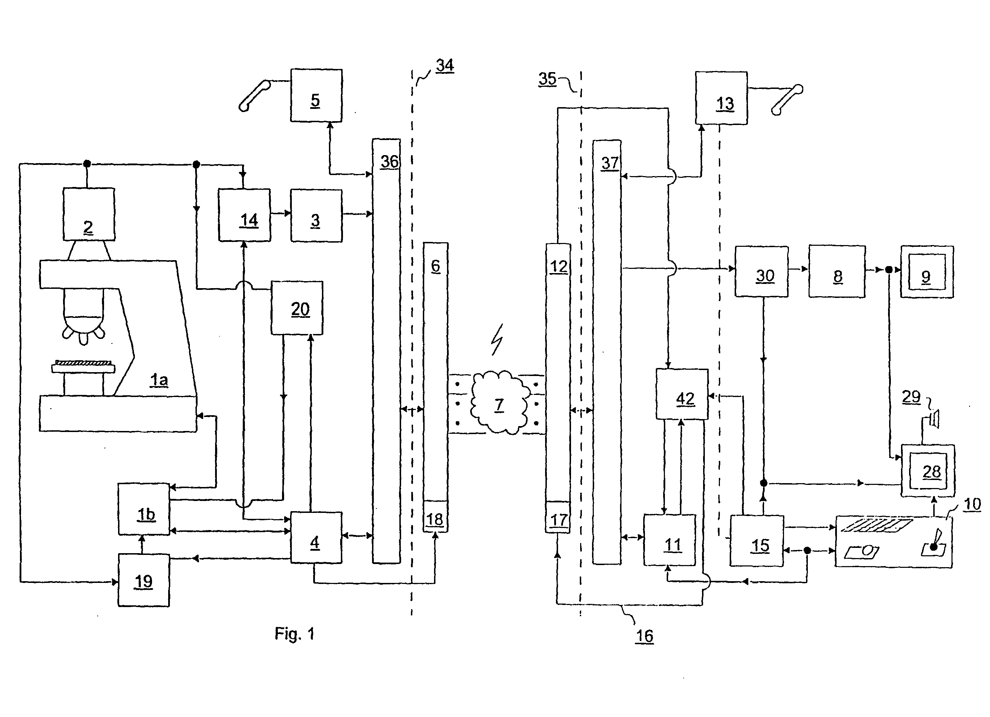

Fig. 1 zeigt blockdiagrammatisch den Aufbau einer bildübertragenden Objektfernuntersuchungseinrichtung in Form einer beispielsweise zur Telepathologie verwendbaren Telemikroskopieanlage. Die Anlage beinhaltet mit ihrer einen Hälfte ein Bildaufnahmesystem in Form einer Mikroskopstation und mit ihrer anderen Hälfte eine vom Ort der Mikroskopstation entfernt angeordnete Beobachtungsstation, wo sich der Beobachter, z.B. ein Pathologe und/oder ein Bildauswertungsrechner, befindet.

Die Mikroskopstation enthält ein übliches, in all seinen Funktionen fernsteuerbares Mikroskop 1a mit zugehöriger Mikroskopsteuerung 1b, eine das Mikroskopgesichtsfeld aufnehmende Bildaufnahmeeinrichtung 2, eine Bilddatencodiereinrichtung 14, welche die von der Bildaufnahmeeinrichtung 2 zugeführten Bilddaten unter Verwendung herkömmlicher Verfahren zur Bilddatenkompression und Bilddatenreduktion codiert, einen Sender 3 und eine nachfolgende Schnittstelle 36, welche die vom Sender 3 zugeleiteten, codierten Bilddaten von der Mikroskopstation nach außen gibt. An diese Schnittstelle 36 ist zudem ein Sprachkanal 5 in Form eines Fernsprechkanals der Mikroskopstation angeschlossen. Eine Autofokuseinrichtung 19 dient zur selbsttätigen Fokussierung des Mikroskops 1a durch Abgabe entsprechender Fokussierbefehle an die Mikroskopsteuerung 1b. Eine Helligkeitssteuereinheit 20 sorgt für eine selbsttätige Helligkeitssteuerung, wozu ihr die Bilddaten der Bildaufnahmeeinrichtung 2 zugeführt werden und sie entsprechende Helligkeitssteuerbefehle an die Mikroskopsteuerung 1b abgibt. Über die Schnittstelle 36 der Mikroskopstation zugeführte Daten werden von einer Sende-/Empfängereinheit 4 erfaßt, die sie an die jeweiligen Zielkomponenten weiterleitet. Gleichzeitig dient sie als Sender zur Abgabe von Zustandsinformationen aus der Mikroskopsteuerung 1b und der Codiereinrichtung 14 zur Beobachtungsstation, wozu er mit diesen beiden Einheiten 14, 1b über bidirektionale Signalleitungen verbunden ist.

Die Beobachtungsstation enthält einen Bilddatenempfänger 8 mit einem nachgeschalteten Bildwiedergabemonitor 9, wobei der Empfänger 8 über eine Bildübertragungskontrolleinheit 30 an eine Schnittstelle 37 angeschlossen ist, über welche die Beobachtungsstation Daten sendet und empfängt. Wie die Mikroskopstation besitzt auch die Beobachtungsstation einen an ihre Schnittstelle 37 angeschlossenen Fernsprechkanal 13. Des weiteren weist die Beobachtungsstation eine Bedieneinheit 10 auf, welche als Benutzerschnittstelle fungiert. Wie von herkömmlichen Telemikroskopieanlagen bekannt, kann der Benutzer durch Eingabe entsprechender Steuerbefehle an der Bedieneinheit 10 das räumlich entfernte Mikroskop 1a in seinen sämtlichen Funktionen zur Untersuchung eines unter dem Mikroskop 1a liegenden Objektes 43 bzw. Präparates steuern, z.B. hinsichtlich der Verschiebebewegungen des Mikroskoptisches und der Wahl des jeweiligen Objektivs zur Einstellung unterschiedlicher Vergrößerungen. Die Steuerbefehle gelangen zum einen über eine Sender-/Empfängereinheit 11 zur Schnittstelle 37 und zum anderen zu einer Anforderungsbestimmungseinheit 15, welche die abgegebenen Steuerbefehle zur Analyse des Benutzerverhaltens als eines Parameters des Systemzustands der Anlage auswertet. Die Anforderungsbestimmungseinheit 15 gibt ebenso wie die Bildübertragungskontrolleinheit 30 Signale an eine Kontrollanzeigeeinheit der Beobachtungsstation ab, die aus einem Kontrollbildschirm 28 und einem Lautsprecher 29 besteht und die des weiteren direkt mit der Bedieneinheit 10 verbunden ist. Dem Kontrollbildschirm 28 sind außerdem die vom Empfänger 8 empfangenen Bilddaten zuführbar.

Als weitere, wesentliche Komponente beinhaltet die Anlage eine vorliegend beispielhaft in der Beobachtungsstation angeordnete Systemzustandsbestimmungseinheit 42, die von der Anforderungsbestimmungseinheit 15 Informationssignale über das Verhalten des Benutzers an der Bedieneinheit 10 und über die Empfangsfunktion der Sender-/Empfängereinheit 11 die Systemzustandsinformationen von der Mikroskopstation erhält, wie sie dort speziell von der Mikroskopsteuerung 1b und der Codiereinheit 14 über die dortige Sender-/Empfängereinheit 4 abgegeben werden.

Mikroskopstation und Beobachtungstation kommunizieren miteinander über eine virtuelle Teleskopiemikroskopieeinrichtung, die in Fig. 1 durch den Bereich zwischen den beiden gestrichelten Linien 34, 35 zuzüglich der beiden Schnittstellen 36, 37 von Mikroskopstation einerseits und Beobachtungsstation andererseits wiedergegeben ist und einen universellen Befehlsatz für Steuerbefehle, ein geeignetes Bildübertragungsprotokoll sowie eine jeweilige Schnittstelle 6, 12 zu einem zwischenliegenden, als Übertragungsstrecke fungierenden Telekommunikationskanalbündel 7 aufweist, das aus einer zeitlich variablen Anzahl von schmalbandigen Telekommunikations-Einzelkanälen aufgebaut ist. Die virtuelle Telemikroskopieeinrichtung dient dazu, jede beliebige von mehreren möglichen Mikroskopiestationen mit jeder beliebigen von mehreren möglichen Beobachtungsstationen ohne größere Anpassungsmaßnahmen miteinander zwecks Datenaustausch verbinden zu können. Um die jeweils gewünschte Anzahl von Einzelkanälen für das Kanalbündel 7 einstellen zu können, beinhalten die beiden endseitigen Kommunikationskanalschnittstellen 6, 12 eine jeweilige Kanalwahleinheit 18, 17, wobei die auf Seiten der Mikroskopstation gelegene Kanalwahleinheit 18 von deren Sender-/Empfängereinheit 4 angesteuert wird, während die andere Kanalwahleinheit 17 von der Systemzustandsbestimmungseinheit 42 angesteuert wird. Zur Erfassung des Systemzustands erhält die Systemzustandsbestimmungseinheit 42 von der beobachtungsstationseitigen Kommunikationskanal-Schnittstelle 12 eine Information über die Anzahl jeweils zugeschalteter Einzelkanäle.

Das Charakteristische der Telemikroskopanlage von Fig. 1 ist insbesondere darin zu sehen, daß durch die Systemzustandsbestimmungseinheit 42 laufend der Systemzustand einschließlich der Verfügbarkeit der Systemressourcen festgestellt und in Abhängigkeit davon zum einen die jeweilige Anzahl von zu einem Übertragungskanalbündel zusammengefaßten Einzelkanälen der Übertragungsstrecke 7 zwischen Mikroskopstation und Beobachtungsstation festgelegt wird und zum anderen die Parameter für die Bilddatenkompression und -reduktion in der Codiereinheit 14 passend eingestellt werden. Die den Systemzustand beeinflussenden Parameter sind insbesondere das von der Anforderungsbestimmungseinheit 15 über die vorgenommenen Betätigungen an der Bedieneinheit 10 erfaßte Benutzerverhalten, der Istzustand der zum Übertragungsbündel zusammengefaßten Anzahl von Einzelkanälen, die Art der verwendeten Übertragungsstrecke 7, der Istzustand der Codiereinheit 14, der verwendete Typ von Mikroskop 1a und Bildaufnahmeeinrichtung 2 sowie der jeweilige Bildinhalt. All diese Informationen werden von der Systemzustandsbestimmungseinheit 42 von den betreffenden Anlagekomponenten abgefragt. Die Anzahl von Übertragungskanälen und die Art der Bilddatenkompression und -reduktion werden dann von der Sytemzustandsbestimmungseinheit 42 jeweils so eingestellt, daß trotz Verwendung von Schmalband-Übertragungskanälen ein möglichst guter Online-Eindruck für das am Monitor 9 wiedergegebene Bild von einem jeweils unter dem Mikroskop liegenden Objekt 43 bei für jede Situation ausreichend gewählter Bildqualität aufrechterhalten wird. Hierzu sind für die Telemikroskopieanlage von Fig. 1 eine Anzahl spezieller Vorgehensweisen vorgesehen, auf die nachfolgend im einzelnen näher eingegangen wird.

Ein wichtiger Punkt ist die systemzustandsabhängige Bilddatenkompression und -reduktion in der Codiereinheit 14. Um die wegen der Schmalbandigkeit beschränkte Übertragungskanalkapazität für die Bildübertragung optimal zu nutzen, wird die Bildinformation von der Codiereinheit 14 in jedem Falle komprimiert und so weit wie für die jeweilige Anwendung zulässig auch reduziert. Da der Benutzer während seiner Arbeit an der Telemikroskopieanlage unterschiedliche Anforderungen an die Bildauflösung, die Bildübertragungsrate und die Bildgröße des Mikroskopbildes stellt, wäre ein fest eingestelltes Bildkompressions- und Bildreduktionsverfahren unkomfortabel. Deshalb benutzt die Telemikroskopieanlage eine systemzustandsabhängig variable Bilddatenkompression und -reduktion. Abhängig vom Systemzustand, wie er durch die Systemzustandsbestimmungseinheit 42 laufend festgestellt wird, insbesondere abhängig von den über die Anforderungsbestimmungseinheit festgestellten Anforderungen des Benutzers an das System, wird der jeweils beste Kompromiß zwischen Bildübertragungsrate und Eildauflösung bestimmt und an der Codiereinheit 14 vom System selbsttätig eingestellt. Hierzu sendet die Systemzustandsbestimmungseinheit 42 über die Sender-/Empfängereinheit 11 und die Übertragungsstrecke 7 entsprechende Codiersteuersignale zur Mikroskopstation, die dort von der Sender-/Empfängereinheit 4 empfangen und zur Codiereinheit 14 weitergeleitet werden.

Zeigt der Benutzer beispielsweise durch häufiges und rasches, ferngesteuertes Bewegen des Präparates 43 unter dem Mikroskop 1a oder durch akustische Eingabesignale an, daß er Präparatbereiche rasch in einer Übersicht durchmustern will, so stellt das System die hierfür erforderliche hohe Bildrate ein, während die Bildauflösung zurückgenommen werden kann. Umgekehrt interpretiert das System ein längeres Verweilen an demselben Präparatbereich dahingehend, daß dieser Bereich mit hoher örtlicher Auflösung und dafür kleinerer Bildrate genauer untersucht werden soll, wozu wiederum die Codierungsart geeignet eingestellt wird. Die solchermaßen aus dem Benutzerverhalten sowie den übrigen Systemzustandsparametern abgeleiteten Anforderungen an die Bildcodierung dienen zur Steuerung der Betriebseigenschaften der Codiereinheit 14 hinsichtlich lateraler Bildauflösung, Farbauflösung und zeitlicher Auflösung in Form der Bildübertragungsrate. Es können dabei alle Zustände von höchster Auflösung bei minimaler Bildrate bis zu sehr kleiner Auflösung bzw. kleinem Bildfeld bei Fernsehbildrate in beliebigen Schritten automatisch eingestellt werden. Die Codiereinstellungen erfolgen völlig selbsttätig und erfordern vom Benutzer keine Aktivitäten, die ihn von seiner eigentlichen Untersuchungstätigkeit ablenken könnten. Als Codierverfahren sind herkömmliche Verfahren verwendbar, sofern sie einen Eingriff in ihre Betriebsweise mit dem Ziel der erläuterten Einstellung eines Kompromisses zwischen Bildübertragungsrate und Bildauflösung gestatten, wie dies z.B. bei den unter den Abkürzungen JPEG und MPEG geläufigen Codierverfahren der Fall ist. Diese Art der variablen und flexiblen Bilddatenkompression und -reduktion führt zu einer sehr ökonomischen Ausnutzung der Übertragungskanalkapazität und zu einem situationsabhängig bestmöglichen Online-Eindruck der übertragenen Bildsequenzen.

Eine weitere Maßnahme zur optimalen Ausnutzung der Übertragungskapazität der Schmalband-Übertragungsstrecke 7 mit möglichst gutem Online-Eindruck der übertragenen Bildsequenzen ist die automatische Bündelung einer jeweiligen, variablen Anzahl schmalbandiger Einzelkanäle. Dies ist problemlos und kostengünstig beispielsweise bei Verwendung des öffentlichen Fernsprechnetzes als Übertragungsstrecke realisierbar, da dort unter Umständen bei Nebenstellenanlagen schon mehrere Einzelkanäle verfügbar sind oder andernfalls leicht zusätzliche Anschlüsse geschaltet werden können. Abhängig vom Systemzustand bestimmt die Systemzustandsbestimmungseinheit 42 die jeweils optimale Anzahl von zu einem Übertragungsbündel zusammengefaßten Einzelkanälen und gibt entsprechende Steuerbefehle für die Kanalwahleinheiten 17, 18 ab, wobei sie die beobachtungstationseitige Kanalwahleinheit 17 über eine Steuerleitung 16 direkt ansteuert. Die Steuerbefehle für die andere Kanalwahleinheit 18 werden über die beobachtungsstationsseitige Sender-/Empfängereinheit 11 und die anschließende Schnittstelle 37 auf die Übertragungsstrecke 7 gegeben und von dieser zur Mikroskopstation übertragen, wo sie von der dortigen Sender-/Empfängereinheit 4 aufgenommen und zur Steuerung der betreffenden Kanalwahleinheit 18 verwendet werden. Alternativ kann die Schnittstelle 6 so ausgelegt sein, daß sie die an der Gegenschnittstelle 12 eingestellte Kanalbelegung aus dem Datenstrom entnimmt, so daß die Ansteuerung über die Sender-/Empfängereinheit 4 entfallen kann.

Damit wird eine automatische Zuwahl oder Abwahl von jeweiligen Einzelkanälen realisiert, wobei das zu übertragende Signal geeignet aufgeteilt und auf die verschiedenen Kanäle verteilt wird. Eine solche Signalaufteilung ist auf anderen Gebieten der Datenübertragung bekannt, so daß hierauf nicht näher eingegangen zu werden braucht. Bei dieser Technik ist darauf zu achten, daß empfängerseitig die Signale der Einzelkanäle wieder zeitrichtig zusammengesetzt werden. Dies ist ein nicht trivialer Steuerungsvorgang, da der Benutzer keine Kontrolle darüber hat, auf welchen Wegen die einzelnen Fernsprechkanäle durchgeschaltet werden. Dies kann beispielsweise im einen Fall über eine terrestrische Verbindung und im anderen Fall über eine Satellitenverbindung geschehen. Die ISDN-Netztechnololgie hat sich für den vorliegenden Anwendungsfall als besonders geeignet zur Realisierung einer derartigen Kanalbündellösung erwiesen.

Durch die Verwendung der Autofokuseinrichtung 19 läßt sich Bildübertragungskapazität einsparen, die ansonsten für Fokussierzwecke benötigt würde. Denn um interaktiv eine Mikroskopszene zu fokussieren, ist die Übertragung sehr vieler, in Fokusnähe auch sehr hoch aufgelöster Bilder mit entsprechendem Signalaufkommen notwendig. Diese für die eigentliche Auswertung der Mikroskopbildszene nicht relevante Übertragung von Bilddaten wird durch die Autofokuseinrichtung 19 vermieden, die sich automatisch bei Anforderung eines neuen Bildausschnittes oder einer anderen Vergrößerung aktiviert oder deren Parameter von der Systemzustandsbestimmungseinheit 42 systemzustandsabhängig eingestellt werden können. Als Autofokuseinrichtung 19 kann eine solche verwendet werden, wie sie in der Offenlegungsschrift DE 42 26 523 A1 offenbart ist, worauf hier verwiesen werden kann.

Analog zu dieser selbsttätigen Fokussierung verfügt die Telemikroskopieanlage über eine Helligkeitssteuerung 20, die wahlweise automatisch oder systemzustandsabhängig von der Systemzustandsbestimmungseinheit 42 gesteuert wird, wozu letztere entsprechende Steuerbefehle an die Helligkeitssteuereinheit 20 übermittelt. Auch diese automatische Helligkeitssteuerung vermeidet die Übertragung von für die Auswertung redundanter Bildinformation und erlaubt damit wiederum eine verbesserte Nutzung der Übertragungskapazitäten zur Erzielung eines möglichst guten Online-Eindrucks der am Monitor 9 wiedergegebenen Bildsequenzen.

Die Telemikroskopieanlage erlaubt des weiteren die Vermittlung des Bewegungseindrucks eines unter dem Mikroskop 1a bewegten Präparates 43 für die am Monitor 9 dargestellten Bildsequenzen, indem für solche bewegten Bildsequenzen ein Online-Eindruck erzeugt wird, wofür zwei verschiedene Vorgehensweisen in Betracht kommen. Vorauszuschicken ist dabei, daß die Beobachtung der Präparatbewegung unter dem Mikroskop 1a häufig ein wichtiges Orientierungshilfsmittel für den Benutzer darstellt, gerade auch in der Telepathologie, und bei Schmalband-Übertragungsstrecken ein solcher bewegter Bildeindruck in Echtzeit durch permanente Online-Übertragung des Mikroskopgesichtsfeldes wegen der beschränkten Übertragungskanalkapazitäten unmöglich ist.

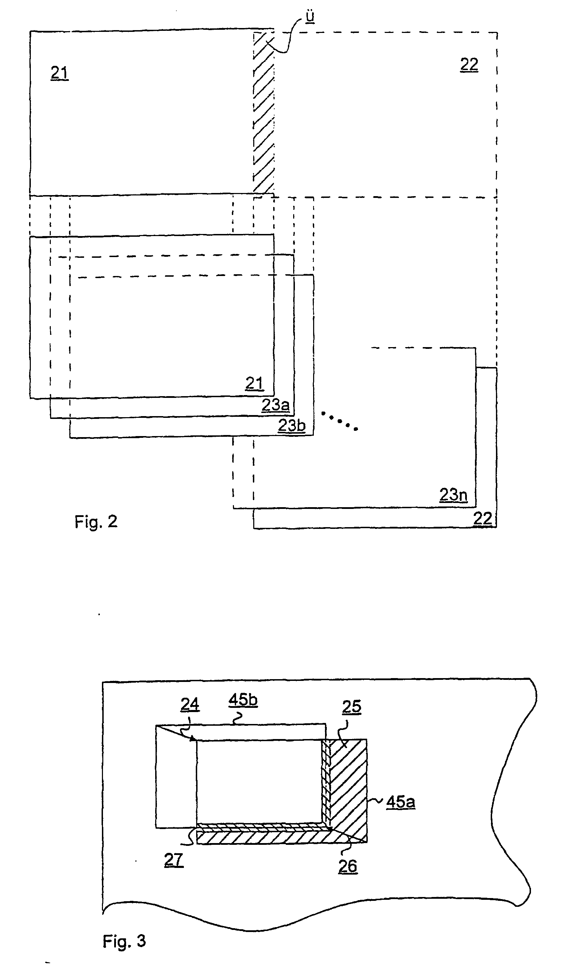

Eine erste Vorgehensweise zur Bewegungseindruckvermittlung ist in Fig. 2 veranschaulicht. Bei diesem Verfahren wartet der Bilddatensender 3 nach benutzerseitiger Anforderung einer Präparatbewegung jeweils nach Übertragung eines Bildes 21 so lange mit der Übertragung eines nächsten Bildes 22, bis eine genügend große Präparatbewegung stattgefunden hat, was durch entsprechende Verschiebungsschwellwerte festgelegt wird. Diese sind so gewählt, daß das nächste übertragene Bild 22 zumindest noch teilweise mit dem zuvor übertragenen Bild 21 überlappt, wie in Fig. 2 oben durch einen schraffierten Überlappungsbereich Ü dargestellt. Auf Seiten der Beobachtungsstation, d.h. in einem dem Bildwiedergabemonitor 9 zugeordneten Rechner, wird dann durch gleichmäßige Interpolation eine vorgebbare Anzahl von Zwischenbildern 23a, 23b, ..., 23n mit jeweils gleichmäßiger gegenseitiger Verschiebung generiert und dem Betrachter fortlaufend nacheinander zwischen den beiden übertragenen Einzelbildern 21, 22 vorgeführt. Der Beobachter bekommt somit den Eindruck einer gleichmäßigen Präparatbewegung, die lediglich gegenüber der Bewegungsanforderung zeitlich etwas verzögert ist. Dafür brauchen nur die beiden endseitigen Einzelbilder 21, 22 der gesamten Bildsequenz gemäß Fig. 2 übertragen zu werden, während die in Fig. 2 unten dargestellten Zwischenbilder 23a, ..., 23n erst auf Seiten der Beobachtungsstation generiert werden und daher keine Übertragungskanalkapazität beanspruchen.

Eine zweite mögliche Vorgehensweise zur Bewegungseindruckvermittlung trotz schmalbandiger Übertragungsstrecke 7 ist in Fig. 3 veranschaulicht. Bei diesem Verfahren werden bei einer Präparatbewegung, wie in Fig. 3 durch einen Bewegungspfeil 24 veranschaulicht, in mehreren Schritten jeweils nur die neu in das Gesichtsfeld hereintretenden Bildbereiche 25 übertragen, welche diejenigen Bereiche des aktuellen Gesichtsfeldes 45a darstellen, die nicht mit dem Gesichtsfeld 45b des vorangegangenen Schrittes überlappen. Da die Fläche der jeweils neu hinzukommenden Bildbereiche 25 deutlich kleiner als die Gesamtfläche des Mikroskopgesichtsfeldes ist, ergibt sich eine entsprechende Reduktion der zu übertragenden Bilddatenmenge. Auf Seiten der Beobachtungsstation werden dann die übertragenen Bildbereiche 25 an das bestehende Bild angefügt, welches zuvor entsprechend verschoben wurde, wie mit dem Verschiebungspfeil 26 in Fig. 3 dargestellt. Bei diesem Verfahren ist die zeitliche Verzögerung zwischen Bewegungsanforderung und Reaktion auf dem Monitor 9 der Beobachtungsstation im Vergleich zum erstgenannten Verfahren geringer, dafür ist die Bewegungsgeschwindigkeit des Präparates etwas mehr eingeschränkt.

Die Parameter beider Verfahren können jeweils vollautomatisch vom System eingestellt werden, indem dieses über die Anforderungsbestimmungseinheit 15 die vom Benutzer angeforderte Präparatbewegung erfaßt. Die Bildmontage kann so erfolgen, daß der Beobachter keinerlei Störungen im Stoßstellenbereich 27 zweier aufeinanderfolgender Bilder, wie er in Fig. 3 schraffiert angedeutet ist, wahrnimmt, was dadurch bewirkt wird, daß ein kleiner Überlappungsbereich aufeinanderfolgender Bilder dazu benutzt wird, eine Korrelationsanalyse durchzuführen und daraus die genaue Anstückelung zu bestimmen. Da Größe und Richtung der Bewegungsanforderung dem System über die Anforderungsbestimmungseinheit 15 bekannt sind, ist ihm auch die ungefähre Lage der aufeinanderfolgenden Bilder bekannt, so daß die Korrelationsanalyse nur noch kleinere Korrekturen zu liefern hat. Dies stellt folglich eine Mischung aus Vorabwissen und Auswertung von Bildinformation dar. Das System kann abhängig vom erfaßten Benutzerverhalten eine jeweils passende Bildfolgestrategie auswählen, die von der Bewegung um einzelne Spalten oder Zeilen bis zu ganzen Bildern reichen kann. Damit wird die zeitaufwendige und unnötige Übertragung redundanter Bildinformation verhindert.

Die Codiereinheit 14 ist so ausgelegt, daß sie die Bildqualität nach vorgegebenen Maßen bestimmt und an den Sender 3 zur Benutzung weitergibt. Dabei werden Qualitätsmaße verwendet, welche die örtliche Auflösung, die Farbtreue und den Kontrast betreffen und dazu dienen, das Ausmaß eventueller Bildverschlechterungen durch Datenreduktion quantitativ und damit zum einen die Information des Bildinhaltes und zum anderen den für einen menschlichen Beobachter sichtbaren Bildqualitätsverlust beurteilen zu können. Eine solche Beurteilung kann auch vorgenommen werden, wenn statt des menschlichen Beobachters eine rechnergestützte Bildauswertung vorgesehen ist. Die mit diesen Bildqualitätsmaßen möglichen Quantifizierungen erlauben eine systematische Optimierung der Systemparameter und die Ermittlung optimaler Kompromisse zwischen Benutzerforderungen und Systembegrenzungen.

Die Gestaltung der als Benutzerschnittstelle dienenden Bedieneinheit 10 ist nach dem Gesichtspunkt gewählt, das System effektiv interaktiv unter Berücksichtigung der Tatsache nutzen zu können, daß der Bilddatendurchsatz und damit die effektiv mögliche Arbeitsgeschwindigkeit durch den Engpaß der Übertragungsstrecke 7 bestimmt ist. Für eine solche Gestaltung gibt es verschiedene Alternativen. Vorzugsweise zeigt die Bedieneinheit 10 dem Beobachter in ergonomisch geeigneter Weise den Systembelastungszustand und limitierende Faktoren an, damit dieser sein Verhalten passend danach ausrichten kann.

Eine Gestaltungsmöglichkeit besteht darin, nach Anforderung einer Mikroskopsteuerungsaktion über die Bedieneinheit 10 durch den Benutzer letzterem auf dem zugeordneten Kontrollbildschirm 28 und/oder dem angekoppelten Lautsprecher 29 jeweils das Ende einer auf diese Anforderung hin erfolgten Bildübertragung beziehungsweise Mikroskopaktion anzuzeigen, so daß er dann eine neue Aktion starten oder eine begonnene fortführen kann. Die optische Signalisierung besteht beispielsweise aus einer Nachricht wie "*System führt Objektivwechsel durch*" oder "*Autofokusprozeß läuft"* oder aus einem Symbol oder einer Farbe, um den Grad der Verfügbarkeit der Systemressourcen, wie die Kanalbelegung, anzuzeigen. Akustisch kann der Systembeschäftigungszustand beispielsweise durch unterschiedliche Tonhöhen oder Tonimpulsfolgen signalisiert werden. Bei dieser Vorgehensweise steuert die Bildübertragungskontrolleinheit 30 den Kontrollbildschirm 28 und den Lautsprecher 29 passend an.

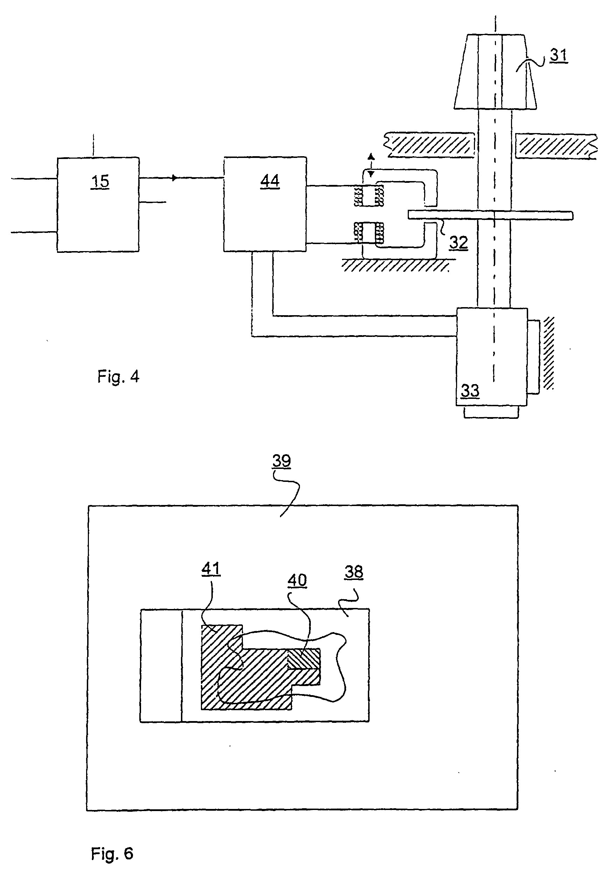

Als weitere Gestaltungsmöglichkeit kann eine mechanische Rückkopplung vorgesehen sein, wie sie in Fig. 4 in Form einer Kraftrückführung auf ein Bedienelement 31 der Bedieneinheit 10 dargestellt ist. Das Bedienelement 31 kann beispielsweise ein Drehknopf an der Bedieneinheit 10 zur Fernsteuerung des Mikroskoptisches sein. Dem Benutzer wird über Kraftrückkopplung mechanisch am Bedienelement 31 der Grad der Systemauslastung bzw. im Grenzfall die Systemblockierung angezeigt. Dazu wird über eine Ansteuereinheit 44 der Bedieneinheit 10, die Eingangsinformationen über den Systemzustand, wie er von der-Systemzustandsbestimmungseinheit 42 ermittelt wird, erhält, mittels eines Reibungskraftstellgliedes 32 in Abhängigkeit von den Eingangsinformationen eine definierte Reibung und/oder mittels eines Kraftrückkopplungsmotors 33 eine aktive Reaktionskraft eingestellt. Bei Blockierung der Anlage wird auch das Bedienelement 31 blockiert. Vorliegend signalisiert die rückgeführte Kraft neben den Kräften am Mikroskop vor allem den Belegungszustand der Anlage beziehungsweise deren am stärksten ausgelasteten Komponente, was im allgemeinen die Übertragungsstrecke 7 ist. Der Benutzer spürt unmittelbar, wenn er seine Aktionen fortsetzen beziehungsweise eine neue Aktion starten kann.

Ergonomische, dem jeweiligen Anwendungsgebiet angepaßte Gestaltungen der Bedieneinheit 10 sind ein wichtiger Punkt für die Akzeptanz einer solchen Anlage, z.B. als Telemikroskopieanlage in der Medizin. Eine Gestaltungslösung ist beispielsweise die Realisierung als eine Bedienmaus, mit der alle Mikroskopaktionen ferngesteuert von einer computermausähnlichen Konstruktion gesteuert werden können. Neben dieser gängigen Maustechnik kommt eine an den klassischen Mikroskopierarbeitsplatz extrem angepaßte Lösung in Betracht, die darin besteht, daß die Bedieneinheit 10 als Phantommikroskop gebildet ist, das aus einem dem realen Mikroskop des Bildaufnahmesystems nachgebildeten Mikroskop ohne Optik, jedoch sonst allen Bedienelementen besteht. Diese Bedienelemente sind mit Gebern zur Erfassung der Benutzeranforderungen und gegebenenfalls mit den erwähnten Kraftrückkopplungen gemäß Fig. 4 verbunden und erlauben die Steuerung des echten Mikroskops 1a der Mikroskopstation durch sinnfällige Bedienaktionen am Phantommikroskop der Beobachtungsstation. Mit dem Phantommikroskop steht dem Benutzer ein ihm gewohntes Arbeitsgerät zur Verfügung, so daß er sich nicht umzugewöhnen oder einzuarbeiten braucht. Einziger Unterschied zu seinem klassischen Arbeitsplatz ist die Beobachtung des Mikroskopgesichtsfeldes am Bildwiedergabemonitor 9 der Beobachtungsstation anstatt durch das Mikroskopokular.

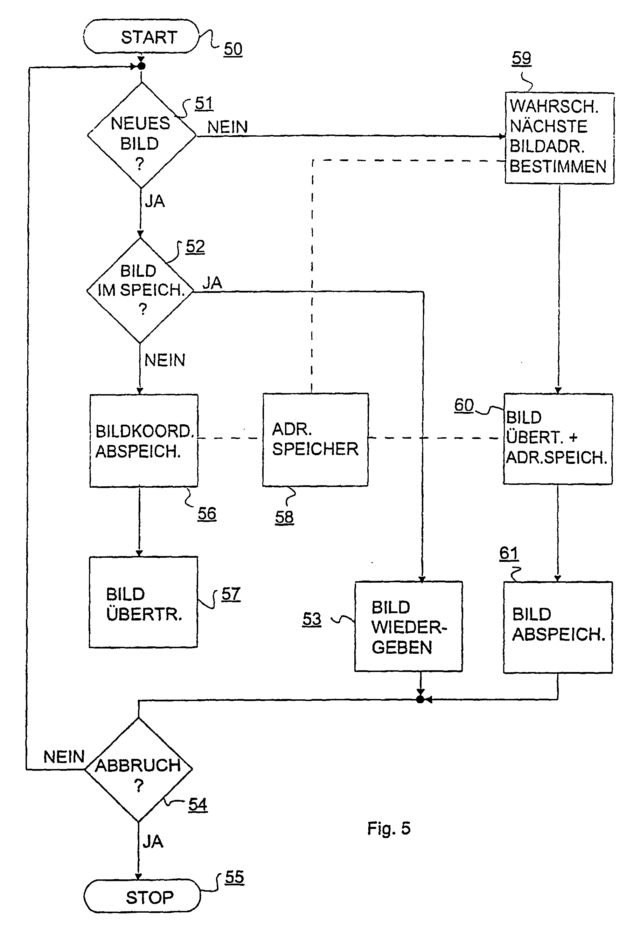

Als weitere Funktionalität besitzt die gezeigte Telemikroskopieanlage die Fähigkeit zur prophylaktischen Übertragung von Bildszenen. Ausgehend von der Tatsache, daß bei einer eingehenden Untersuchung von Bildszenen im allgemeinen Zeitintervalle auftreten, in denen die vorhandene Übertragungskanalkapazität nicht genutzt wird, werden diese Zeitintervalle von der Anlage dazu genutzt, im Hintergrund weitere Bilder aus Bereichen des Mikroskopgesichtsfeldes zu übertragen, von denen angenommen wird, daß sie anschließend vom Benutzer angefordert werden. Dazu enthält die Anlage einen nicht näher gezeigten Prädiktor für die wahrscheinliche Fortsetzung einer Untersuchung. Dieser Prädiktor schließt aus den Orten der bislang übertragenen Gebiete des Präparates auf die Orte der nächsten Bildübertragung. Der Programmablauf für derartige Bildübertragungen ist in Fig. 5 als Flußdiagramm dargestellt.

Nach einem Startschritt 50 folgt zunächst ein Abfrageschritt 51 dahingehend, ob eine neue Bildanforderung vorliegt. Wenn dies der Fall ist, wird in einem darauffolgenden Abfrageschritt 52 geprüft, ob das neu angeforderte Bild bereits als zuvor übertragenes Hintergrundbild in einem zugehörigen Speicher abgelegt ist. Wenn dies der Fall ist, kann dieses abgespeicherte Bild im nächsten Schritt 53 sofort aus dem Speicher abgerufen und auf dem Monitor dargestellt werden. Ein nachfolgender Abfrageschritt 54 entscheidet dann, ob der Programmablauf abgebrochen und damit ein Stopschritt 55 erreicht oder zur Durchführung eines neuen Programmzyklus hinter den Startschritt 50 zurückgesprungen wird.

Wenn sich im diesbezüglichen Abfrageschritt 52 ergibt, daß das neu angeforderte Bild noch nicht im Speicher vorliegt, werden zunächst die Koordinaten des Bildfeldes abgespeichert (Schritt 56), wonach dann das angeforderte neue Bild übertragen wird (Schritt 57), so daß es auf dem Monitor dargestellt werden kann. Zur Abspeicherung der Bildfeldkoordinaten ist ein entsprechender Adreßspeicher 58 vorgesehen, der in Fig. 5 durch gestrichelte Linien symbolisch mit den ihn betreffenden Programmpunkten verbunden ist.

Wenn im diesbezüglichen Abfrageschritt 51 das Fehlen einer neuen Bildanforderung festgestellt wird, bestimmt der Prädiktor in einem nächsten Schritt 59 die wahrscheinlichste nächste Bildadresse, beispielsweise durch Verlängerung der Spur der zuletzt übertragenen Präparatbereiche um ein zuvor verwendetes Verschiebungsinkrement. Anschließend wird dieses wahrscheinlichste nächste Bild im Hintergrund während eines Zeitintervalls ungenutzter Übertragungskanalkapazität übertragen und seine Adresse abgespeichert (Schritt 60). Das übertragene Bildfeld wird dann im zugehörigen Bildspeicher abgelegt (Schritt 61), wo es dann auf Abruf bereitsteht. Anschließend wird mit dem Abbruchabfrageschritt 54 fortgesetzt. Diese prophylaktische Bildübertragung im Hintergrund bewirkt, daß sich im Mittel die Bildanzeigegeschwindigkeit verbessert, da das wahrscheinlichste nächste Bild im Moment seiner Anforderung häufig bereits auf Seiten der Beobachtungsstation im Bildspeicher vorliegt und von dort nur abgerufen zu werden braucht.

Eine weitere vorteilhafte, bei der Telemikroskopieanlage von Fig. 1 getroffene Maßnahme betrifft permanente Orientierungshilfen für den Beobachter, wie sie in Fig. 6 veranschaulicht sind. Diese Orientierungshilfen beinhalten die Benutzung eines separaten Überblicksbildschirms 39, auf dem ein zu Beginn einer Untersuchung vom Objekt angefertigtes Gesamtbild 38 dargestellt wird. Alternativ kann diese Gesamtbilddarstellung auch als eingeblendetes Fenster auf dem Bildwiedergabemonitor 9 oder auf dem Anzeigebildschirm 28 erfolgen. In dem Gesamtbild ist ein in seiner Größe variables Markierungsrechteck 40 vorgesehen, das die Position des aktuellen Mikroskopgesichtsfeldes im Gesamtbild wiedergibt, wobei die Größe des Markierungsrechtecks 40 die Fläche des aktuellen Gesichtsfeldes bezüglich des Gesamtbildes repräsentiert. Bei einem anwählbaren Betriebsmodus bleibt jedes einmal angefahrene und untersuchte Gesichtsfeld im Gesamtbild 38 farblich markiert, so daß der insgesamt farblich markierte Bereich 41 den jeweils bereits untersuchten Präparatbereich angibt, was dem Benutzer eine schnelle Übersicht über die Lage und die Fläche der bereits untersuchten Präparatgebiete gibt. Dies vermeidet Doppeluntersuchungen von Präparatgebieten, was wiederum den Datenfluß verringert.

Die gezeigte Telemikroskopieanlage besitzt des weiteren die Funktionalität, kleine Bildbereiche in Echtzeit übertragen zu können. Dem liegt die Überlegung zugrunde, daß die Übertragungskapazität der Übertragungsstrecke 7 normalerweise ausreicht, einen kleinen Bildausschnitt der gesamten Bildszene in Echtzeit zu übertragen. Diese Funktion ist beispielsweise in der Telepathologie dazu verwendbar, einzelne Zellkerne in mehreren Fokusebenen durchzufokussieren. Der Benutzer wählt dazu das gewünschte Detailbild mit einem kleinen, nicht gezeigten Teilbildrahmen in dem Gesamtbild 38 gemäß Fig. 6 aus und kann dann eine Bildübertragung in Echtzeit mit höchster Bildqualität für den umrahmten Bildausschnitt anfordern.

Des weiteren erlaubt die gezeigte Telemikroskopieanlage die Archivierung von ausgewählten Bildszenen. Mit dieser Funktion wird dem Benutzer die Möglichkeit gegeben, ausgewählte Bildszenen in einer Datenbank oder elektronischen Patientendatei abzuspeichern. Mit dem Bild wird ein Kommentar abgespeichert, der den Ort des Bildes im gesamten untersuchten Präparat sowie sämtliche Aufnahmebedingungen, insbesondere die verwendeten Mikroskopeinstellungen, angibt. Gleichzeitig werden diese Bilder in Kleinformat auf dem Bildwiedergabemonitor 9 während der Untersuchung eines Falles bereitgehalten.

Als Gegenstück zu dieser Archivierungsfunktion bietet die gezeigte Telemikroskopieanlage zudem die Möglichkeit, ausgewählte Präparatstellen erneut aufzurufen. Durch Anwählen eines Kleinbildes oder durch Aufruf aus der Datenbank oder der Patientenkartei heraus wird die gewünschte Bildszene des Präparates anhand der mitabgespeicherten Daten über den Bildort und die Mikroskopparameter aufgesucht und dargestellt. Bei Bedarf kann die Untersuchung des Präparates anschließend in der Nachbarschaft dieses Bildortes fortgesetzt werden. Diese Funktionalität ist besonders nützlich, wenn das Präparat zunächst voruntersucht und anschließend von einem Experten anhand der vorausgewählten Bildszenen endgültig bewertet wird.

In der gezeigten Telemikroskopieanlage ist zudem eine Lupenfunktion für die Inspektion vorgewählter Präparatstellen inplementiert, mit welcher der Beobachter im Gesamtbild 38 gemäß Fig. 6 an eine auswählbare Stelle springen und selbige mit einer höheren Vergrößerung untersuchen kann. Diese Lupenfunktion wird vom System selbsttätig ausgeführt. Nach dem Ende eines Lupenfunktionsvorgangs werden automatisch der vorherige Vergrößerungszustand und der vorherige Untersuchungsort wieder eingestellt. Diese Funktionalität bietet dem Benutzer die Möglichkeit von Detailuntersuchungen mit relativ wenigen, von ihm vorzunehmenden Systemeingaben.

Um den Benutzern auf beiden Seiten der Telemikroskopieanlage, z.B. dem Pathologen auf Seiten der Beobachtungsstation und dem Operationspersonal auf Seiten der Mikroskopstation, eine optische Diskussionshilfe anzubieten, besitzt die gezeigte Telemikroskopieanlage je ein Zeigersymbol für jeden Diskussionspartner. Die beiden Zeigersymbole sind in Farbe und/oder Form unterschiedlich und werden von der jeweiligen Station gesteuert und damit bewegt und auch auf der jeweils anderen Station angezeigt, was die Diskussion von Bilddetails zwischen den voneinander entfernten Diskussionspartnern erleichtert beziehungsweise eindeutig macht.

Es versteht sich, daß die in Fig. 1 gezeigten, verschiedenen Funktionskomponenten der Telemikroskopieanlage jeweils als getrennte Bauteile oder als miteinander integrierte Einheiten beispielsweise eines Rechners sowie, soweit sich dies anbietet, in Software statt Hardware realisiert sein können, wie dies dem Fachmann geläufig ist. Des weiteren versteht sich, daß vom Fachmann neben der gezeigten weitere erfindungsgemäße Telemikroskopieanlagen realisierbar sind und daß die Erfindung zudem andere Arten von Objektfernuntersuchungseinrichtungen umfaßt, insbesondere Teleendoskopie- und Telesonographieanlagen. Bei Teleendoskopieanlagen ist das Mikroskop der gezeigten Telemikroskopieanlage durch ein ferngesteuertes oder von einer Bedienperson geführtes Endoskop ersetzt. In Telesonographieanlagen ist das Mikroskop der gezeigten Telemikroskopieanlage entsprechend durch ein ferngesteuertes oder von einer Bedienperson geführtes Sonographiesystem ersetzt. Im übrigen sind auch bei diesen Anlagentypen dieselben vorteilhaften Verfahrensweisen realisierbar, wie sie oben für die Telemikroskopieanlage erläutert wurden.

## Patentansprüche

1. Bildübertragende Objektfernuntersuchungseinrichtung mit
- einem am Ort des zu untersuchenden Objektes (43) angeordneten Bildaufnahmesystem,
- einer davon räumlich entfernt angeordneten Beobachtungsstation zur Bildauswertung und zur Fernsteuerung des Bildaufnahmesystems und
- einer zwischenliegenden, schmalbandigen Telekommunikations-Übertragungsstrecke bestehend aus einem oder mehreren Einzelkanälen oder aus einem Bündel von Einzelkanälen, über welche die aufgenommenen Bilder unter Verwendung von Bilddatenkompression und/oder -reduktion zur Beobachtungsstation sowie die Fernsteuerbefehle zum Bildaufnahmesystem übertragen werden,
gekennzeichet durch
- eine Systemzustandsbestimmungseinheit (42), die laufend den bildübertragungsrelevanten Gesamtsystemzustand erfasst und abhängig davon die Bilddatenkompression und/oder -reduktion und/oder die Anzahl von in einem Übertragungsbündel benutzten Telekommunikations-Einzelkanälen zur Erzielung sowohl einer für die jeweilige Situation benötigten Bildqualität als auch eines jeweils noch bestmöglichen Online-Bildeindrucks variabel steuert.

2. Bildübertragende Objektfernuntersuchungseinrichtung nach Anspruch 1, weiter **dadurch gekennzeichnet, daß** die Systemzustandsbestimmungseinheit (42) die Parameter zur Datenkompression und/oder -reduktion unter anderem in Abhängigkeit vom Bildinhalt und der gewählten Bildvergrößerung festlegt.

3. Bildübertragende Objektfernuntersuchungseinrichtung nach Anspruch 1 oder 2, weiter **dadurch gekennzeichnet, daß** als Übertragungsstrecke ein Bündel einer variablen Anzahl von Telekommunikationskanälen dient, wobei die Kanalanzahl von der Systemzustandsbestimmungseinheit (42) in Abhängigkeit vom erfaßten Gesamtsystemzustand eingestellt und die Kanallaufzeiten selbsttätig kompensiert werden.

4. Bildübertragende Objektfernuntersuchungseinrichtung nach einem der Ansprüche 1 bis 3, weiter **dadurch gekennzeichnet, daß** das Bildaufnahmesystem eine Autofokuseinrichtung (19) zur selbsttätigen Bildfokusierung beinhaltet.

5. Bildübertragende Objektfernuntersuchungseinrichtung nach einem der Ansprüche 1 bis 4, weiter **dadurch gekennzeichnet, daß** das Bildaufnahmesystem eine Helligkeitssteuerungseinrichtung (20) zur selbsttätigen Helligkeitssteuerung beinhaltet.

6. Bildübertragende Objektfernuntersuchungseinrichtung nach einem der Ansprüche 1 bis 5, weiter **gekennzeichnet durch** in der Beobachtungsstation angeordnete Mittel zum Erzeugen und Anzeigen von Zwischenbildern (23a, ..., 23n) zwischen zwei aufeinanderfolgend übertragenen, sich teilweise überlappenden Einzelbildern (21, 22).

7. Bildübertragende Objektfernuntersuchungseinrichtung nach einem der Ansprüche 1 bis 5, weiter **dadurch gekennzeichnet, daß** von einem neu aufgenommenen Bild (45a) jeweils nur derjenige Bereich (25) übertragen wird, der nicht in einem zuvor aufgenommenen Bild (45b) enthalten ist, wobei die übertragenen Bildbereiche in der Beobachtungsstation passend an das bisher dargestellte Bild angefügt werden.

8. Bildübertragende Objektfernuntersuchungseinrichtung nach einem der Ansprüche 1 bis 7, weiter **dadurch gekennzeichnet, daß** die Beobachtungsstation Mittel (28, 29, 31, 32, 33, 44) zur optischen, akustischen und/oder kraftrückwirkungsmechanischen Anzeige des Systembeschäftigungszustands aufweist.

9. Bildübertragende Objektfernuntersuchungseinrichtung nach einem der Ansprüche 1 bis 8, weiter **dadurch gekennzeichnet, daß** die Beobachtungsstation als Bedieneinheit eine der im Bildaufnahmesystem vorgesehenen Bildaufnahmeeinrichtung nachgebildete Phantom-Bildaufnahmeeinrichtung aufweist.

10. Bildübertragende Objektfernuntersuchungseinrichtung nach einem der Ansprüche 1 bis 9, weiter **dadurch gekennzeichnet, daß** sie voraussichtlich später benötigte Bilder anhand der Bedienaktivitäten vorausschätzt und in Zeitpunkten mit ungenutzter Übertragungskanalkapazität zur Beobachtungsstation überträgt und dort abspeichert.

11. Bildübertragende Objektfernuntersuchungseinrichtung nach einem der Ansprüche 1 bis 10, weiter **gekennzeichnet durch** Darstellungswerkzeuge, welche die Darstellung eines Objektgesamtbildes (38) umfassen, in welchem das aktuelle Gesichtsfeld und optional die bereits untersuchten Objektbereiche als jeweilige Markierungsflächen (40, 41) dargestellt wird.

12. Bildübertragende Objektfernuntersuchungseinrichtung nach einem der Ansprüche 1 bis 11, weiter **dadurch gekennzeichnet, daß** die Beobachtungsstation Mittel zur Abspeicherung von Archivierungsdaten für eine jeweils übertragene Bildszene aufweist.

13. Bildübertragende Objektfernuntersuchungseinrichtung nach Anspruch 12, weiter **dadurch gekennzeichnet, daß** anhand der Archivierungsdaten eine jeweils ausgewählte Bildszene durch die Einrichtung selbsttätig wieder einstellbar ist.

14. Bildübertragende Objektfernuntersuchungseinrichtung nach einem der Ansprüche 1 bis 13, weiter **gekennzeichnet durch** Mittel zum Auswählen kleiner Bildbereiche des Gesichtsfeldes und zur Übertragung des jeweils ausgewählten, kleinen Bildbereiches in Echtzeit mit der höchstmöglichen Bildqualität.

## Claims

1. image-transmitting, remote-object-examination device comprising:
- an image recording system located at the site of the object (43) to be examined,
- a distant observation station for image evaluation and remotely control the image-recoding system, and
- an intermediate, narrow-band telecommunication transmission path consisting of one or a plurality of individual channels, or a bundle of individual channels by means of which the recorded images are transmitted to the observation station using image data compression and/or reduction, and the remote control commands are transmitted to the imaging system,
**characterized by**
- a system status determining unit (42) that continuously determines the overall system status affecting image transmission and, in dependence theron, variably controls the image data compression and/or reduction and/or the number of individual telecommunication channels used in a transmission bundle to attain an image quality required for the respective situation, as well as a respectively best possible online image impression.

2. Image-transmitting, remote-object-examination device according to claim 1, further **characterized in that** the system status determining unit (42) sets the parameters for data compression and/or reduction depending, among other things, on the image content and selected image enlargement.

3. Image-transmitting, remote-object-examination device according to claim 1 or 2, further **characterized in that** a bundle consisting of a variable number of telecommunication channels serves as the transmission path, whereby the number of channels is set by the system status determining unit (42) as a function of the determined overall system status, and the channel delay times are independently compensated.

4. Image-transmitting, remote-object-examination device according to one of claims 1 to 3, further **characterized in that** the image-recording system contains an automatic focusing device (19) for automatically focusing images.

5. Image-transmitting, remote-object-examination device according to one of claims 1 to 4, further **characterized in that** the image-recording system contains a brightness control device (20) for automatically controlling the brightness.

6. Image-transmitting, remote-object-examination device according to one of claims 1 to 5, further **characterized by** means disposed in the observation station to generate and display intermediate images (23a, ... 23n) between two sequentially transmitted, partially overlapping individual images (21, 22).

7. Image-transmitting, remote-object-examination device according to one of claims 1 to 5, further **characterized in that** from a newly-taken image (45a) in each case only that area (25) is transmitted that is not contained in a previously taken image (45b), whereby the transmitted image areas are appropriately added to the previously portrayed image in the observation station.

8. Image-transmitting, remote-object-examination device according to one of claims 1 to 7, further **characterized in that** the observation station has means (28, 29, 31, 32, 33, 44) for displaying the state of system activity visually, acoustically, and/or by means of mechanical force feedback.

9. image-transmitting, remote-object-examination device according to one of claims 1 to 8, further **characterized in that** the observation station is provided with a phantom image-recording device as an operating unit modeled as a copy of the image-recording device provided in the imaging system.

10. Image-transmitting, remote-object-examination device according to one of claims 1 to 9, further **characterized in that** it evaluates beforehand images provisionally required later, based on the operating activities, and transmits them to the observation station at times when transmission channel capacity is unused, and stores them there.

11. Image-transmitting, remote-object-examination device according to one of claims 1 to 10, further **characterized by** display tools that includes the display of an overall object image (38) in which is portrayed the current field of view and optionally the already-investigated object areas as respective marking regions (40, 41).

12. Image-transmitting, remote-object-examination device according to one of claims 1 to 11, further **characterized in that** the observation station comprises means for storing archived data for a respectively transmitted image scene.

13. Image-transmitting, remote-object-examination device according to claim 12, further **characterized in that** a respectively selected image scene can be automatically readjusted by the device based on the archived data.

14. Image-transmitting, remote-object-examination device according to one of claims 1 to 13, further **characterized by** means for selecting small image areas of the field of vision and for transmitting the respectively selected, small image area in real-time with the best possible image quality.

## Revendications

1. Equipement de transmission de signaux vidéo pour la téléanalyse de l'objet, disposant
- d'un système de prise de vue disposé sur le site de l'objet (43) à analyser,
- d'une station d'observation disposée éloignée de ces derniers et servant à l'interprétation des images et à la commande à distance du système de prise de vue, et
- d'un trajet de transmission de télécommunications à bande étroite se trouvant entre eux et composé d'une ou de plusieurs voies uniques ou d'un faisceau de voies uniques, au moyen desquelles les prises de vue sont transmises en réalisant une compression de données d'images et/ou une réduction de données d'images vers la station d'observation ainsi que les instructions de commande à distance vers le système de prise de vue,
**caractérisé en ce**
- **qu'**une unité d'évaluation de l'état du système (42) enregistre en continu l'état global du système relatif à la transmission de signaux vidéo et, en fonction de ceci, commande d'une manière variable la compression de données d'images et/ou la réduction de données d'images et/ou la quantité des voies uniques de télécommunications utilisées dans un faisceau de transmission afin d'obtenir non seulement une qualité d'image nécessaire dans la situation en question mais également une impression d'image en ligne la meilleure possible.

2. Equipement de transmission de signaux vidéo pour la téléanalyse de l'objet selon la revendication 1, **caractérisé en outre en ce que** l'unité d'évaluation de l'état du système (42) détermine les paramètres pour la compression des données et/ou la réduction des données entre autres en fonction du contenu de l'image et de l'agrandissement de l'image sélectionné.

3. Equipement de transmission de signaux vidéo pour la téléanalyse de l'objet selon la revendication 1 ou 2, **caractérisé en outre en ce qu'**un faisceau d'une quantité variable de voies de télécommunications est utilisé en tant que trajet de transmission, la quantité de voies de l'unité d'évaluation de l'état du système (42) étant ajustée en fonction de l'état global du système enregistré et les temps de propagation de la voie étant automatiquement compensés.

4. Equipement de transmission de signaux vidéo pour la téléanalyse de l'objet selon l'une quelconque des revendications 1 à 3, **caractérisé en outre en ce que** le système de prise de vue comporte un équipement d'autofocalisation (19) servant à focalisation automatique de l'image.

5. Equipement de transmission de signaux vidéo pour la téléanalyse de l'objet selon l'une quelconque des revendications 1 à 4, **caractérisé en outre en ce que** le système de prise de vue comporte un équipement de réglage de luminosité (20) servant au réglage automatique de la luminosité.

6. Equipement de transmission de signaux vidéo pour la téléanalyse de l'objet selon l'une quelconque des revendications 1 à 5, **caractérisé en outre par** des moyens disposés dans la station d'observation servant à la production et à l'affichage d'images intermédiaires (23a, ..., 23n) entre deux images individuelles (21, 22) qui se chevauchent partiellement et qui sont transmises successivement.

7. Equipement de transmission de signaux vidéo pour la téléanalyse de l'objet selon l'une quelconque des revendications 1 à 5, **caractérisé en outre en ce que** seule la zone (25) non contenue dans une prise de vue antérieure (45b) d'une nouvelle prise de vue (45a) est transmise à chaque fois, les zones d'images transmises étant ajoutées dans la station d'observation d'une manière adaptée à l'image représentée jusqu'ici.

8. Equipement de transmission de signaux vidéo pour la téléanalyse de l'objet selon l'une quelconque des revendications 1 à 7, **caractérisé en outre en ce que** la station d'observation comporte des moyens (28, 29, 31, 32, 33, 44) servant à l'indication optique, acoustique et/ou mécanique en retour de force de l'état d'occupation du système.

9. Equipement de transmission de signaux vidéo pour la téléanalyse de l'objet selon l'une quelconque des revendications 1 à 8, **caractérisé en outre en ce que** la station d'observation, en tant qu'unité fonctionnelle, comporte un équipement de prise de vue fantôme reconstitué de l'équipement de prise de vue prévu dans le système de prise de vue.

10. Equipement de transmission de signaux vidéo pour la téléanalyse de l'objet selon l'une quelconque des revendications 1 à 9, **caractérisé en outre en ce qu'**il évalue par anticipation les images ultérieurement nécessaires en se servant des activités de commande et par le fait qu'il les transmet aux moments où la capacité de la voie de transmission n'est pas utilisée au niveau de la station d'observation où il les sauvegarde.

11. Equipement de transmission de signaux vidéo pour la téléanalyse de l'objet selon l'une quelconque des revendications 1 à 10, **caractérisé en outre par** des outils de représentation comportant la représentation d'une image globale de l'objet (38), dans laquelle le champ de vision actuel et, optionnellement, les zones de l'objet déjà analysées sont représentés sous forme de surface de marquage (40, 41) correspondante.

12. Equipement de transmission de signaux vidéo pour la téléanalyse de l'objet selon l'une quelconque des revendications 1 à 11, **caractérisé en outre en ce que** la station d'observation comporte des moyens de sauvegarde de données d'archivage pour chaque scène de l'image transmise.

13. Equipement de transmission de signaux vidéo pour la téléanalyse de l'objet selon l'une quelconque des revendications 1 à 12, **caractérisé en outre en ce que** l'équipement peut re-régler automatiquement chaque scène sélectionnée de l'image à partir des données d'archivage.

14. Equipement de transmission de signaux vidéo pour la téléanalyse de l'objet selon l'une quelconque des revendications 1 à 13, **caractérisé en outre par** des moyens servant à la sélection de petites zones d'images du champ de vision ainsi qu'à la transmission de chacune des petites zones d'images sélectionnées en temps réel avec la meilleure qualité d'image possible.
